# EUROPEAN PATENT APPLICATION

(11) **EP 1 742 451 A1**
(43) Date of publication of application: **10.01.2007**
(21) Application number: 05254204.0
(22) Date of filing: 05.07.2005
(51) Int. Cl.: H04M 3/42, H04Q 3/42

(54) **Phone calls using a fixed dial plan**

(71) Applicant: Zyxel Communications Corporation, Hsin-Chu, Taiwan (TW)
(72) Inventor: Chen, Zoneson, Cupertino, CA 95014 (US); Chuang, Gee-Hwan, Santa Clara, CA 95054 (US)
(74) Representative: Dearing-Lambert, Peter Richard

(57) **Abstract**

A communication method dials phone calls by using fixed numbers and includes the following steps. A phone number is receives. A first processing step is performed to transform the phone number into a first dialing number. A correct PSTN gateway is selected according to the first dialing number. A first detection step is performed to judging whether the first dialing number is matched with a country code of the PSTN gateway. If not matching, a final dialing number is generated by adding an IDD of the PSTN gateway to the first dialing number. Otherwise, a country code is removed from the first dialing number to generate a second dialing number and a final processing step is performed to transform the second dialing number to a final dialing number. Finally, the final dialing number is sent to the PSTN gateway. A communication apparatus for implementing the above method is also disclosed.

## Description

### BACKGROUND OF THE INVENTION

1. Field of the Invention

The present invention relates to a communication method for placing phone calls by using a fixed dial plan, and more particularly to a communication method that provides translation functions between two different dial plans to allow a calling party to place phone calls by using a particular dial plan, even if the associated telecommunication switch understands a different dial plan.

2. Description of the Prior Art

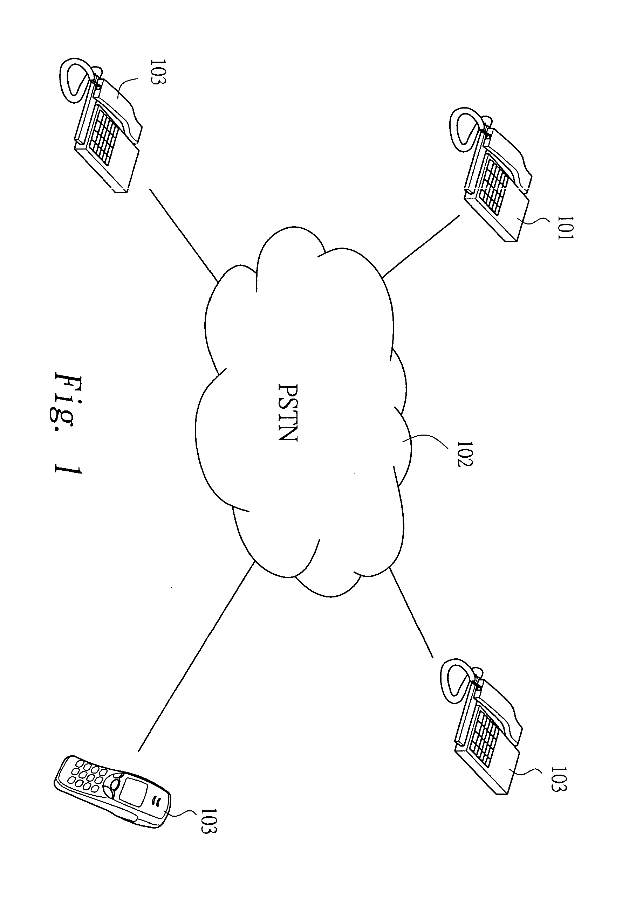

Fig. 1 shows a schematic diagram of a conventional telecommunication system through which phone calls can be made. When a user wants to dial a phone call through the international telecommunication system, a telephone set 101 of a calling party is connected to another phone set 103 of a called party through a public switched telephone network (PSTN) 102. The user at the telephone set 101 should follow the local dial plan to place the call to the telephone set 102.

A telecommunication numbering plan is a set of rules used by the telecommunication industry to define the telephone numbers and how to place phone calls. A telephone number is a sequence of decimal digits (0-9) that is used to identify the destination in a PSTN. A dial plan describes the numbers and pattern of digits that a user dials to reach a particular telephone number.

E.164 is an ITU-T (International Telecommunication Union Telecommunication Standardization Sector) recommendation that defines the international public telecommunication numbering plan. According to E.164, a telephone number structure for a geographic area is:

1. Country code - country code is also known as Country Calling code and IDD (International Direct Dialing) code. It is the national prefix to be used when dialing to a particular country from another country.

2. Area code ― area code is also known as National Destination code and NDD (National Direct Dialing) code. It usually indicates a specific geographical area.

3. Subscriber number.

So we can identify an E.164 telephone number as: country code―area code―subscriber number ("-" is a separator for easy reading only). Taking ZyXEL headquarters phone number (886-3-5783942) as an example, 886 is the country code of Taiwan, 3 is the area code of Hsin-Chu, and 578-3942 is the subscriber number.

In addition to the format of the telephone numbers, E.164 also defines a list of country codes and the international dial plan. According to the E.164 international dial plan, the format of the international dialing number is: +country code-area code-subscriber number. The "+" is the international call prefix that is also known as IDD (International Direct Dialing) prefix. We will use IDD prefix in the rest of this document. Even though E.164 recommends 00 for the IDD prefix, it is not well accepted by the telecommunication industry. Each numbering plan in a particular region or country has its own value of IDD prefix. For example, 011 is the IDD prefix defined in the North American Numbering Plan. The dialing number is 011-886-3-578-3942 in order to reach ZyXEL headquarters from the North American region (USA, Canada, Bermuda, and many Caribbean nations).

E.164 does not cover the dial plan to place local calls and long distance calls. The dial plan for local calls and long distance calls is defined in the regional or countrywide numbering plan. Most of the telecommunication numbering plans requires an NDD (National Direct Dialing) prefix for a long distance call, but the value of NND prefix is not a standard either. For example, 1 is the NDD prefix defined in North American Numbering Plan and 0 is the NDD prefix defined in Taiwan. Taking ZyXEL USA phone number (1-714-632-0882) as an example, 1 is the country code of USA, 714 is the area code of Anaheim in California, and 632-0882 is the subscriber number. The dialing number is 632-0882 for a local call and it is 1-714-632-0882 for a long distance call (here, 1 is NDD prefix not country code).

It is usually pretty tough for international travelers to figure out how to make phone calls in a new region or country without any help. The reason is because the dial plan is not a universal standard. One of the possible solutions is to standardize the dial plan for all countries. However, it is uneasy to achieve this target and the existing telecommunication switches (Telco Switches) usually understand only the regional or countrywide dial plan.

It is therefore tried by the inventor to develop a communication method for placing phone calls by using a fixed dial plan, so that a user may always place local and long distance calls in a familiar manner. The communication method of the present invention does not change any existing dial plan or telecommunication switches. In stead, the communication method of the present invention is compatible with various kinds of dial plans, and provides a reasonable and effective way for everyone to easily place phone calls through the local Telco switches.

### SUMMARY OF THE INVENTION

A primary object of the present invention is to provide a communication method for placing phone calls by using a fixed dial plan, so that a user in any region or country may place phone calls in a familiar manner.

To achieve the above and other objects, the communication method for placing phone calls by using a fixed dial plan according to the present invention includes the steps of: (1) receiving a dialing number; (2) transforming the dialing number into an E.164 telephone number; (3) transforming the E.164 telephone number into a final dialing number that is understood by the attached telecommunication switch; and (4) sending the final dialing number to the telecommunication switch.

### BRIEF DESCRIPTION OF THE DRAWINGS

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:

Fig. 1 shows a schematic diagram of a conventional telecommunication system;

Fig. 2 shows a schematic diagram of a phone call between the calling party and the called party;

Fig. 3 shows a schematic diagram of an intelligent apparatus that performs a translation function solely between two dial plans;

Fig. 4 is a schematic diagram showing an SIP phone performs a first translation function and a PSTN Gateway performs a second translation function; wherein an E.164 telephone number is common to both the SIP phone and the PSTN Gateway;

Fig. 5 is a schematic diagram showing the relation between a translator, an SIP phone, and a PSTN Gateway;

Fig. 6 is a flowchart showing the steps included in the first translation function; and

Fig. 7 is a flowchart showing the steps included in the second translation function.

### DETAILED DESCRIPTION OF THE INVENTION

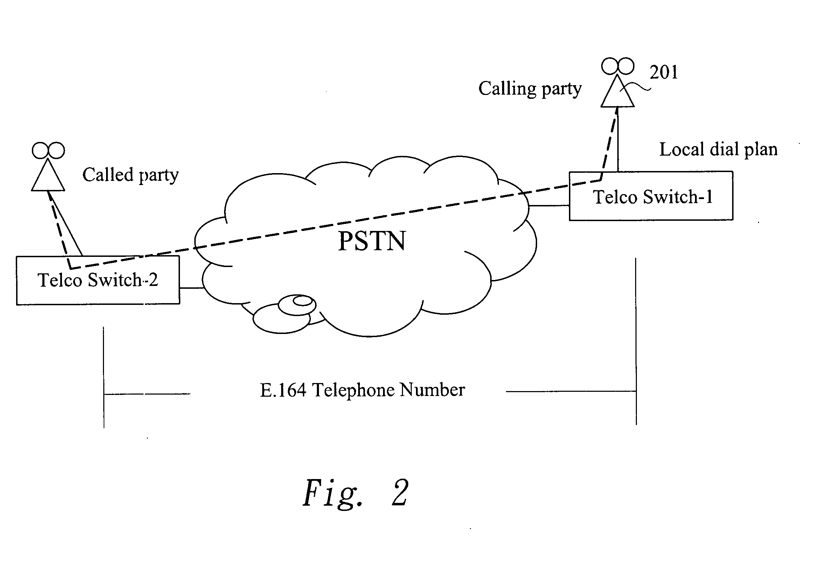

Please refer to Fig. 2 that is a schematic diagram showing a phone call made between a calling party and a called party. It is usually true that a Telco Switch-1 in Figure 2 only understands a dial plan B defined in the particular region or country where it resides. The present invention does not try to change today's telecommunication infrastructure such as dial plans and telecommunication switches. Instead, the present invention tries to accommodate them and make it easier to foreigners to place phone calls via Telco Switch-1.

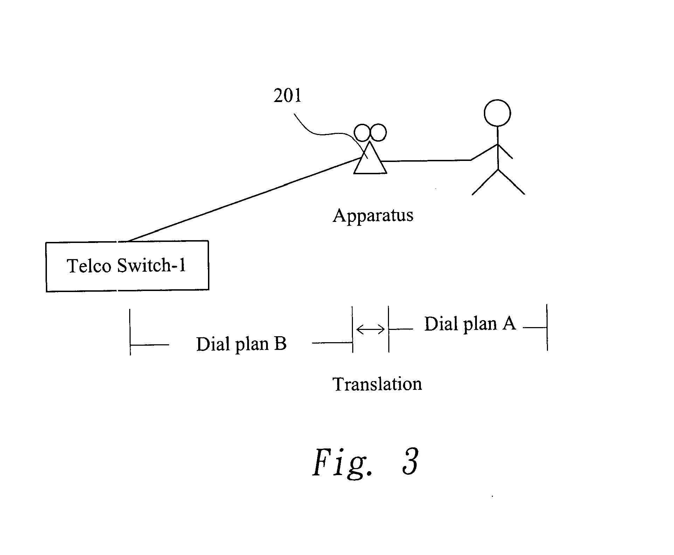

Fig. 3 explores the calling party and Telco Switch-1 in Fig. 2 further. It illustrates that there exists an international traveler who uses an apparatus that is able to translate the dialing number based on a dial plan A to the dialing number based on the dial plan B. It is assumed that the traveler is familiar with the dial plan A to place the phone calls. In Fig. 3, it looks like it is a single translation function. In fact, this single translation is combined by two sub-translation functions. A language that is common between the two sub-translation functions is the E.164 telephone number that is well accepted by telecommunication industry. The first sub-translation function converts the dialing number based on the dial plan A into the E.164 telephone number. Then, the second sub-translation function converts the E.164 telephone number into the dialing number based on the dial plan B. In this document, the first sub-translation function is referred to as the translation-1 and the second sub-translation function is referred to as the translation-2, and the combination of the two sub-translation functions is referred to as the Translation function.

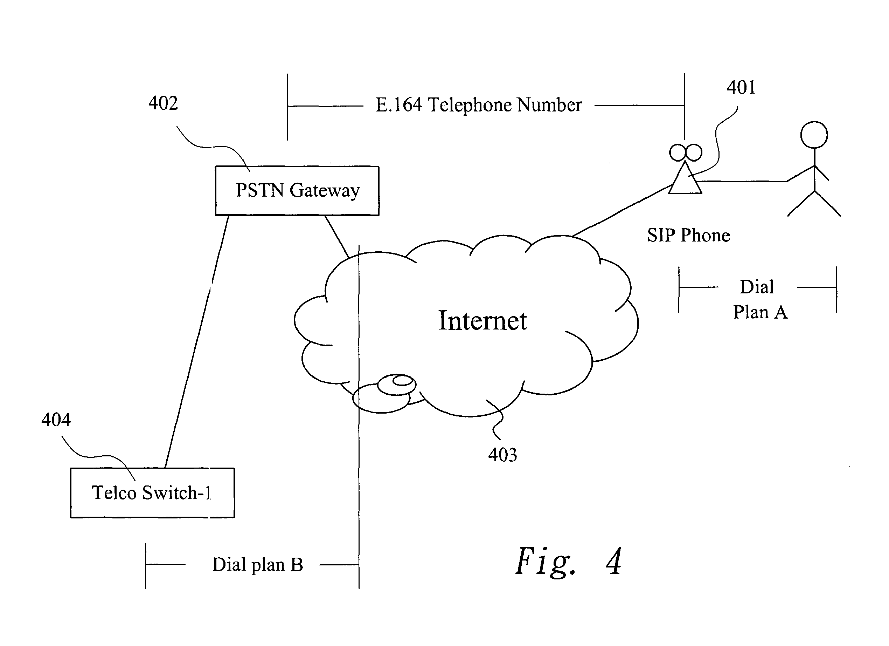

Since there are two independent translation functions in the apparatus, it is possible to split the mechanism of translation-1 to one device and the mechanism of translation-2 to another device as shown in Fig. 4. In Fig. 4, Internet 403 is a sample medium between two devices, namely, an SIP (Session Initiation Protocol) phone 401 and a PSTN Gateway 402. Potentially, the medium could be another type of networks. The same is true for the SIP phone 401 and the PSTN Gateway 402. In Fig. 4, the SIP phone 401 interacts with human beings and performs the translation-1, and the PSTN Gateway 402 performs the translation-2 and sends the properly converted dialing number to a Telco Switch-1 404.

There are other servers in Internet 403 in order to route IP packets and voice messages. Since they are irrelevant to the present invention, they are not shown in Fig. 4. The telephone number inside the communication messages between the SIP phone 401 and the PSTN Gateway 402 is in E.164 format.

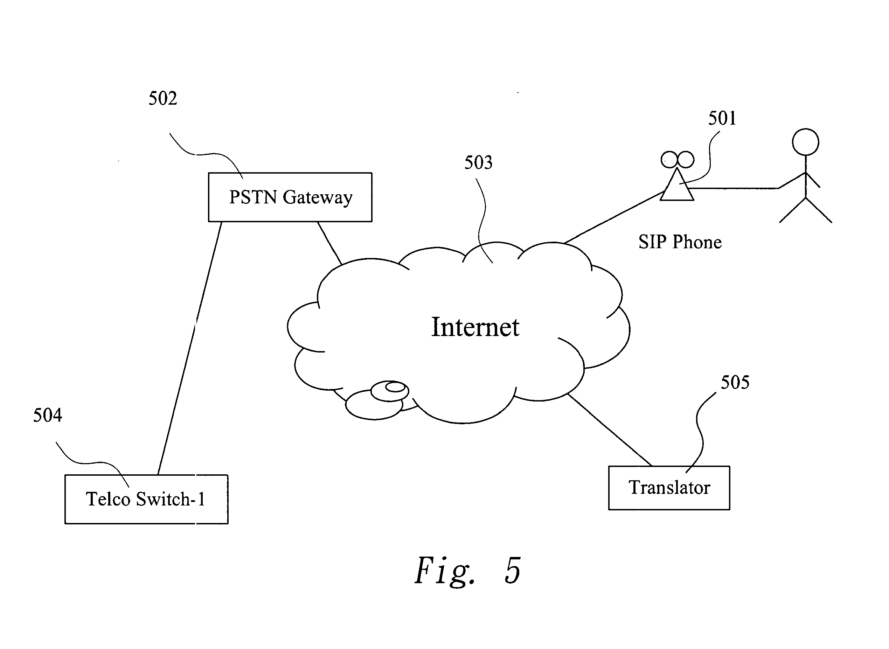

It is also possible to add a server in a network 503 to perform the translation functions as shown in Fig. 5. For simplicity, the server is referred to as the Translator 505 in this document. Here is what the Translator 505 can do:

1. The translator 505 can perform the Translation function solely if neither the SIP phone 501 nor the PSTN Gateway 502 is able to perform the translation functions.

2. The translator 505 can perform the translation-2 if the SIP phone 501 is able to perform the translation-1 and the PSTN Gateway 502 is unable to perform the translation-2.

3. The translator 505 can perform the translation-1 if the SIP phone 501 is unable to perform the translation-1 and the PSTN Gateway 502 is able to perform the translation-2.

In the present invention, each translation function has a corresponding dial plan, and each dial plan has the following components needed by either the translation-1 or the translation-2: (1) IDD prefix, (2) NDD prefix, (3) Country code, and (4) Area code.

In this document, the IDD prefix of dial plan A used by the translation-1 is indicated as IDD prefix-A, and the IDD prefix of dial plan B used by the translation-2 is indicated as IDD prefix-B. Similar codes are defined for the NDD prefix, Country code, and Area code.

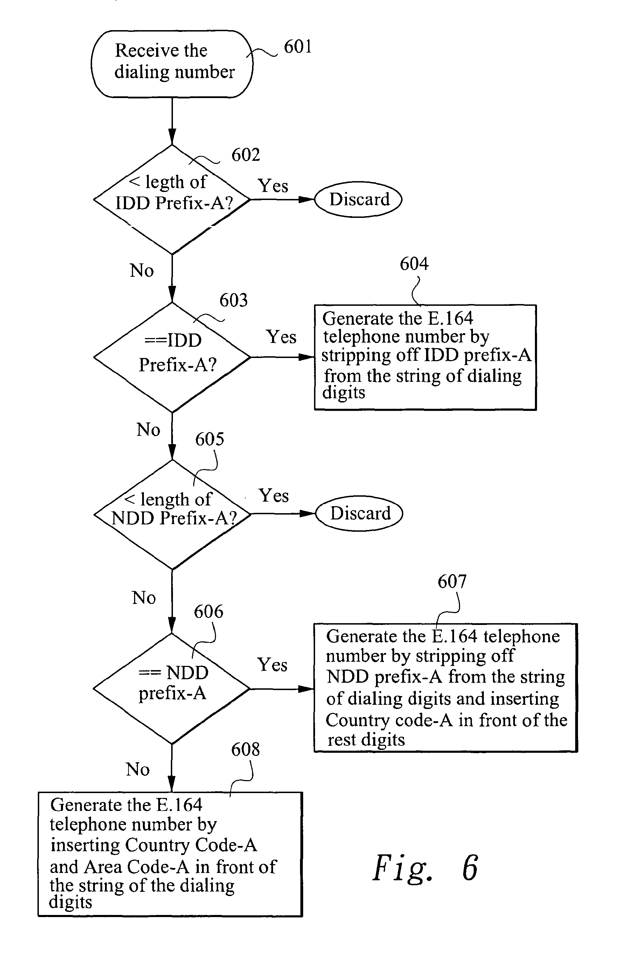

Please refer to Fig. 6 that is a flowchart showing the logic flow of the translation-1 with dial plan A.

First, a dialing number, which is a string of digits, is received (Step 601). It is assumed that the dialing number follows dial plan A. Otherwise, it would fail. Then, it is checked whether the dialing number has a length less than that of the IDD prefix-A. If yes, the dialing number is discarded (Step 602).

If the length of the dialing number is not less than that of the IDD prefix-A, it is then further checked whether the string of the dialing digits is the same as the IDD prefix-A (Step 603). If yes, an E.164 telephone number is generated by stripping off the IDD prefix-A from the dialing number. And, the conversion completes (Step 604).

Alternatively, if the string of the dialing digits is not the same as the IDD prefix-A, it is checked whether the dialing number has a length less than that of the NDD prefix-A (Step 605). If yes, the dialing number is discarded.

If the length of the dialing number is not less than that of the NDD prefix-A, it is then further checked whether the string of the dialing digits is the same as the NDD prefix-A (Step 606). If yes, an E.164 telephone number is generated by stripping off the NDD prefix-A from the dialing number and inserting the Country code-A in front of the rest of the digits (Step 607). And, the conversion completes.

Alternatively, if the string of the dialing digits is not the same as the NDD prefix-A, an E.164 telephone number is generated by inserting the Area code-A in front of the dialing digits first, then inserting the Country code-A in front of the newly generated string of digits (Step 608). And. the conversion completes.

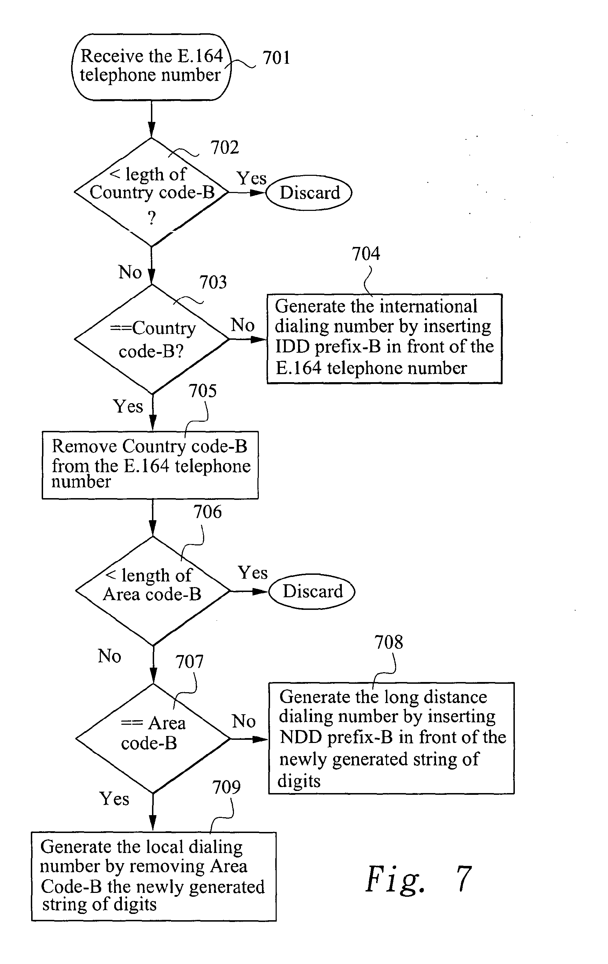

Fig. 7 is a flowchart showing the logic flow of the translation-2 with dial plan B.

First, an E.164 telephone number is received (Step 701). Then, check whether the received E.164 telephone number has a length less than that of the Country code-B (Step 702). If yes, the E.164 telephone number is discarded.

Alternatively, if the received E.164 telephone number has a length not less than that of the Country code-B, then it is further checked whether the string of the E.164 telephone number is the same as the Country code-B (Step 703). If not, an international dialing number is generated by inserting the IDD prefix-B in front of the E.164 telephone number (Step 704). And, the conversion completes.

Alternatively, if the string of the E. 164 telephone number is the same as the Country code-B, the Country code-B is removed from the E.164 telephone number (Step 705).

Then, the new string of digits generated in the Step 705 is checked to see whether it has a length less than that of the Area code-B (Step 706). If yes, the newly generated string of digits is discarded.

Alternatively, if the new string of digits generated in the Step 705 has a length not less than that of the Area code-B, it is further checked whether the newly generated string of digits is the same as the Area code-B (Step 707). If not, a long distance dialing number is generated by inserting the NDD prefix-B in front of the newly generated string of digits (Step 708). And, the conversion completes.

Alternatively, if the newly generated string of digits is the same as the Area code-B, a local dialing number is generated by removing the Area code-B from the newly generated string of digits (Step 709). And, the conversion completes.

Fig. 6 and Fig. 7 show that the logic of the translation-1 and the translation-2 is universal and independent from the device where it resides; and a particular dial plan makes the device behave differently from others. For the same input (either a dialing number or an E.164 telephone number) to the translation function (either the translation-1 or the translation-2), the output could be different if the associated dial plan is different. In this case, the method to customize a device is to configure it to the right dial plan.

Each dial plan has four components, namely, IDD prefix, NDD prefix, Country code, and Area code. Some devices may have two dial plans, such as the intelligent apparatus in Fig. 3 and the Translator in Fig. 5. They have eight (8) components in total to configure. Other devices may have one dial plan, such as the SIP phone and the PSTN Gateway in Fig. 4. In all of the cases, dial plan B is pre-configured by the service provider. So the end users need to worry about at most four components in dial plan A. Otherwise, this invention complicates things instead of simplifying things.

In Fig. 3, the device could be a wired public telephone with pre-configured dial plan B; the default for the dial plan A is the dial plan B here. A traveler needs only to enter the four components of dial plan A. In fact, the traveler only needs to remember the Country code and the Area code of the dial plan A. The IDD prefix and NDD prefix can be their personal choice. For example, if the traveler is from San Jose, USA, then he/she only needs to remember his/her Country code, 1, and the Area code, 408. He/she can choose any personal IDD prefix, such as 1, instead of 011. He/she can also choose any NDD prefix, such as 2, instead of 1. Of course, he/she can select Taiwan's dial plan instead of North American Numbering Plan. Potentially, the device could also be a cellular phone with a SIM (Subscriber Identity Module) card.

In Fig. 4, the PSTN Gateway 502 has the data of the pre-configured dial plan B. The SIP phone 401 could be a personal device carried by its owner everywhere. Its owner only needs to configure it once. The SIP phone 401 could be either wired or wireless.

In Fig. 5, the Translator 505 could be the server to perform both translation functions. In this case, it has the information about the dial plan B that associates to the PSTN Gateway 502. It also has the information about the dial plan A that associates to the SIP phone 501. They are pre-configured. So there is no need to configure the SIP phone 501.

The present invention has been described with some preferred embodiments thereof and it is understood that many changes and modifications in the described embodiments can be carried out without departing from the scope and the spirit of the invention that is intended to be limited only by the appended claims.

## Claims

1. A communication method for placing phone calls by using a fixed dial plan, in which at least one communication apparatus is used to dial a phone number that is sent to a PSTN telecommunication switch, comprising the steps of:
(1) using said communication apparatus to dial a telephone number following a first dial plan;
(2) converting the dialing number following the first dial plan into an E.164 telephone number;
(3) converting the E.164 telephone number into a dialing number following a second dial plan; and
(4) sending the dialing number following the second dial plan to a telecommunication switch.

2. The communication method for placing phone calls by using a fixed dial plan as claimed in claim 1, wherein said communication apparatus is selected from the group consisting of an SIP (Session Initiation Protocol) phone and a mobile phone.

3. The communication method for placing phone calls by using a fixed dial plan as claimed in claim 1, wherein the converting step (2) is implemented via said communication apparatus.

4. The communication method for placing phone calls by using a fixed dial plan as claimed in claim 1, wherein said converting step (2) is implemented via a translator.

5. The communication method for placing phone calls by using a fixed dial plan as claimed in claim 4, wherein said translator is a server connectable to said communication apparatus via a network.

6. The communication method for placing phone calls by using a fixed dial plan as claimed in claim 5, wherein said network is Internet.

7. The communication method for placing phone calls by using a fixed dial plan as claimed in claim 1, wherein said telephone number following the first dial plan is a sequence of decimal digits.

8. The communication method for placing phone calls by using a fixed dial plan as claimed in claim 1, wherein the telephone number following the first dial plan includes at least a first IDD prefix, a first NDD prefix, a first Country code, and a first Area code; and wherein said converting step (2) further comprises the steps of:
(a) checking whether the dialing number following the first dial plan has a length less than the first IDD prefix; if yes, discarding the dialing number; and if no, going to the following step (b);
(b) checking whether the dialing number following the first dial plan has a string of dialing digits the same as the IDD prefix-A; if yes, generating the E.164 telephone number by stripping off the first IDD prefix from the string of dialing digits to complete the conversion; and if no, going to the next step (c);
(c) checking whether the dialing number following the first dial plan has a length less than the first NDD prefix; if yes, discarding the dial number; and if no, going to the next step (d);
(d) checking whether the dialing number following the first dial plan has a string of dialing digits the same as the NDD prefix-A; if yes, generating the E.164 telephone number by stripping off the first NDD prefix from the string of dialing digits an inserting the first Country code in front of the rest digits to complete the conversion; and if no, going to the next step (e); and
(e) generating the E.164 telephone number by inserting the first Country code and the first Area code in front of the string of the dialing digits to complete the conversion.

9. The communication method for placing phone calls by using a fixed dial plan as claimed in claim 1, wherein the converting step (3) is implemented via a PSTN gateway.

10. The communication method for placing phone calls by using a fixed dial plan as claimed in claim 1, wherein the converting step (3) is implemented via a translator.

11. The communication method for placing phone calls by using a fixed dial plan as claimed in claim 10, wherein said translator is a server connectable to said PSTN telecommunication switch via a network.

12. The communication method for placing phone calls by using a fixed dial plan as claimed in claim 10, wherein said network is Internet.

13. The communication method for placing phone calls by using a fixed dial plan as claimed in claim 1, wherein the telephone number following the second dial plan includes at least a second IDD prefix, a second NDD prefix, a second Country code, and a second Area code; and wherein said converting step (3) further comprises the steps of:
(f) checking whether the E.164 telephone number has a length less than that of the second Country code; if yes, discarding the E.164 telephone number; and if no, going to the next step (g);
(g) checking whether the E.164 telephone number has a string of dialing digits the same as the second Country code; if no, generating an international dialing number by inserting the second IDD prefix in front of the E.164 telephone number to complete the conversion; and if yes, going to the next step (h);
(h) removing the second Country code from the E.164 telephone number to generate a new string of digits;
(i) checking whether the new string of digits generated in the step (h) has a length less than that of the second Area code; if yes, discarding the newly generated string of digits; and if no, going to the next step (j);
(j) checking whether the newly generated string of digits is the same as the second Area code; if no, generating a long distance dialing number by inserting the second NDD prefix in front of the newly generated string of digits to complete the conversion; and if yes, going to the next step (k); and
(k) generating a local dialing number by removing the second Area code from the newly generated string of digits to complete the conversion.
